# EUROPÄISCHE PATENTSCHRIFT

(11) **EP 3 648 430 B1**
(45) Veröffentlichungstag und Bekanntmachung des Hinweises auf die Patenterteilung: **02.06.2021**
(21) Anmeldenummer: 18204257.2
(22) Anmeldetag: 05.11.2018
(51) Int. Cl.: H04L 29/06, H04L 9/08, H04L 9/12, H04L 9/32, H04L 29/08, G06F 21/33, G06F 21/57, G06F 21/60, G06F 21/71

(54) **HARDWARE-SICHERHEITSMODUL**
HARDWARE SECURITY MODULE
MODULE DE SÉCURITÉ DE MATÉRIEL

(43) Veröffentlichungstag der Anmeldung: 06.05.2020
(73) Patentinhaber: Wincor Nixdorf International GmbH, 33106 Paderborn (DE)
(72) Erfinder: KRUMMEL, Volker, 33098 Paderborn (DE); GÜNTHER, Peter, 33647 Bielefeld (DE)

(56) Entgegenhaltungen:
- DE-T5-112010 003 338
- US-A1- 2015 134 953
- US-A1- 2015 358 161

## Beschreibung

Ausführungsbeispiele betreffen allgemein Hardware-Sicherheitsmodule. Sicherheitsrelevante kryptographische Operationen können auf darauf spezialisierte, gesicherte Hardware-Peripheriegeräte, sogenannte Hardware-Sicherheitsmodule (HSMs), ausgelagert werden. Je nach Anwendungsfall kann eine hohe Anzahl von kryptographischen Operationen von einem HSM durchzuführen sein, was dazu führen kann, dass das HSM überlastet ist, von ihm empfangene Aufträge in einer Warteschlange gespeichert werden und der Auftraggeber, z.B. ein Computersystem, entsprechend auf die Bearbeitung der Aufträge warten muss. Je nach Anwendung kann dies zu unerwünschten Verzögerungen führen. Es ist wünschenswert, das Auftreten solcher Verzögerungen zu vermeiden.

US2015/134953 offenbart eine Methode zur Lastverteilung an HSMs durch eine zentrale Steuereinheit.

Gemäß einem Ausführungsbeispiel wird ein Hardware-Sicherheitsmodul bereitgestellt, aufweisend einen Empfänger, der zum Empfangen von Aufträgen zur Durchführung kryptographischer Operationen eingerichtet ist und eine Steuereinrichtung, die eingerichtet ist, basierend auf einer Auftragslast des Hardware-Sicherheitsmoduls zu entscheiden, ob ein oder mehrere Aufträge ausgelagert werden sollen und, falls ein oder mehrere Aufträge ausgelagert werden sollen, ein anderes Hardware-Sicherheitsmoduls zum Auslagern der ein oder mehreren Aufträge zu ermitteln, das andere Hardware-Sicherheitsmodul zu authentifizieren und die Abarbeitung der ein oder mehreren Aufträge von dem anderen Hardware-Sicherheitsmodul anzufordern.

Die Figuren geben nicht die tatsächlichen Größenverhältnisse wieder sondern sollen dazu dienen, die Prinzipien der verschiedenen Ausführungsbeispiele zu illustrieren. Im Folgenden werden verschiedene Ausführungsbeispiele mit Bezug auf die folgenden Figuren beschrieben.
Figur 1 zeigt eine Datenverarbeitungsanordnung mit einem Hardware-Sicherheitsmodul.
Figur 2 zeigt eine Datenverarbeitungsanordnung mit mehreren Hardware-Sicherheitsmodulen.
Figur 3 zeigt ein Hardware-Sicherheitsmodul in größerem Detail, das beispielsweise einem der Hardware-Sicherheitsmodule aus Figur 2 entspricht.
Figur 4 zeigt ein Hardware-Sicherheitsmodul, das ein oder mehrere Aufträge an ein anderes Hardware-Sicherheitsmodul auslagern kann.

Die folgende detaillierte Beschreibung bezieht sich auf die beiliegenden Figuren, die Details und Ausführungsbeispiele zeigen. Diese Ausführungsbeispiele sind so detailliert beschrieben, dass der Fachmann die Erfindung ausführen kann. Andere Ausführungsformen sind auch möglich und die Ausführungsbeispiele können in struktureller, logischer und elektrischer Hinsicht geändert werden, ohne vom Gegenstand der Erfindung abzuweichen. Die verschiedenen Ausführungsbeispiele schließen sich nicht notwendig gegenseitig aus sondern es können verschiedene Ausführungsformen miteinander kombiniert werden, so dass neue Ausführungsformen entstehen. Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung.

In Umfeldern, in denen sicherheitsrelevante Transaktionen, wie der Austausch geheimer Daten oder Daten, die nicht gefälscht oder verändert werden dürfen, stattfinden, werden üblicherweise sogenannte Hardware Sicherheitsmodule (HSM) eingesetzt.

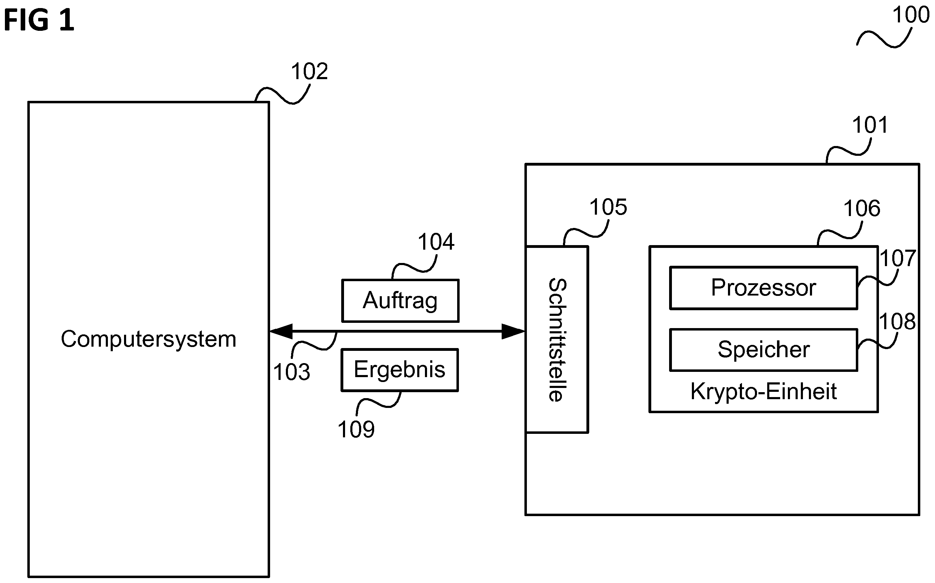

Figur 1 zeigt eine Datenverarbeitungsanordnung 100 mit einem Hardware-Sicherheitsmodul (HSM) 101.

Das Hardware-Sicherheitsmodul 101 ist ein Peripheriegerät für ein Computersystem 102 (z.B. ein Server-Computer oder ein Personal Computer oder auch eine mobile Datenverarbeitungsvorrichtung), mit dem es über eine Kommunikationsverbindung 103 verbunden ist. Das Hardware-Sicherheitsmodul 101 kann intern in dem Computersystem 102 vorgesehen sein oder ein externes Gerät sein. Je nachdem kann die Kommunikationsverbindung 103 beispielsweise ein Computerbus oder eine Verbindung über ein Computernetzwerk sein.

Die Aufgabe des HSM 101 besteht darin, kryptographische Operationen in einer sicheren Umgebung auszuführen. Das Computersystem 102 kann über die Kommunikationsverbindung 103 einen Auftrag 104 zur Durchführung einer kryptographischen Operation in Form einer Nachricht an das HSM 101 senden, den das HSM 101 mittels einer der Kommunikationsverbindung 103 entsprechenden Kommunikationsschnittstelle 105 empfängt (d.h. die in diesem Fall als Empfänger arbeitet).

Das HSM 101 bearbeitet den Auftrag 104. Dazu weist es eine Krypto-Einheit 106 mit Datenverarbeitungskomponenten wie einem Prozessor (CPU) 107 und einen Speicher 108 und möglicherweise weitere Datenverarbeitungskomponenten auf. Nach Bearbeitung des Auftrags 104 sendet das HSM 101 mittels seiner Kommunikationsschnittstelle 105 das Ergebnis 108 der Bearbeitung 109 an das Computersystem 102.

Das HSM 101 kann verschiedene kryptographische Operationen durchführen und dazu verschiedene kryptographische Algorithmen implementieren, wie beispielsweise
- Asymmetrisches Kryptoverfahren, z. B. RSA (Verschlüsselung oder Signatur), Diffie-Hellman-Schlüsselaustausch, ECC (Elliptic Curve Cryptography), ECDSA (Elliptic Curve Digital Signature Algorithm)
- Symmetrische Ver- und Entschlüsselung: AES (Advanced Encryption Standard), DES, (Data Encryption Standard), Triple-DES, IDEA (International Data Encryption Algorithm)
- Kryptologische Hash-Funktionen wie SHA-1 (Secure Hash Algorithm-1)
- Erzeugung von Zufallszahlen, Schlüsseln und PINs (Persönliche Identifikationsnummern; sowohl physisch, als auch deterministisch).

Je nachdem enthält das Ergebnis 109 beispielsweise verschlüsselte oder entschlüsselte Daten, signierte Daten, einen Hashwert, einen kryptographischer Schlüssel (oder ein Schlüsselpaar), eine PIN, eine Zufallszahl oder mehrere davon.

Die Sicherheitsziele beim Einsatz eines HSMs 101 sind typischerweise die Vertraulichkeit und Authentizität der Durchführung einer kryptographischen Operation. Diese Sicherheitsziele werden durch spezielle hardwarebasierte Sicherungsmechanismen für das HSM 101 wie z.B. Sensoren und Chip-Schilde (z.B. gegen physische Angriffe auf einen Chip von der Chip-Rückseite) erreicht. Auf Hardware-Schutz für andere Komponenten, wie beispielsweise für das Computersystem 102, kann dann verzichtet werden. Die Erreichung der Sicherheitsziele wird also typischerweise ausschließlich über kryptographische Protokolle und Mechanismen gewährleistet, deren Sicherheitsanker in der Krypto-Einheit liegt.

Das HSM 101 kann insbesondere umfangreiche Funktionen zur sicheren Verwaltung des HSMs 101 und von ihm gespeicherter Daten, beispielsweise kryptographischer Schlüssel, aufweisen. Beispiele dafür sind die Authentisierung von Operatoren und Administratoren durch Hardware-Token (z. B. mittels einer Chipkarten oder eines Sicherheits-Token), Zugriffsschutz im Mehr-Augen-Prinzip (z.B. sind für einen Zugriff k aus n Personen erforderlich), verschlüsseltes Backup der Daten (wie Schlüssel und Konfigurationsdaten) und sicheres Klonen des HSMs 101.

HSMs sind häufig als Einzelserver mit festem Funktionsumfang, fester Konfiguration und festgelegter Rechenkraft konzipiert. Änderungen der Konfiguration bedürfen typischerweise aufwändige manuelle Prozesse, um Manipulationen des entsprechenden Geräts auszuschließen. Änderungen des Funktionsumfangs gehen typischerweise mit einem Firmware-Upgrade einher, welches ebenfalls über händische manuelle Prozesse erfolgt. Die Performance eines solchen HSMs ist über seine gesamte Lebenszeit unveränderbar und notwendige Performancesteigerungen können nur durch Integration weiterer HSMs vom gleichen Typ realisiert werden, deren Verwaltung und Lastverteilung durch die Infrastruktur erfolgen muss.

Gemäß verschiedenen Ausführungsformen wird deshalb ein HSM bereitgestellt, das die Möglichkeit bietet, Überlastungen (durch eine hohe Anzahl von Aufträgen oder einzelne komplexe Aufträge) dynamisch durch Hinzunahme weiterer freier HSMs abzufangen. Nach Abarbeitung der Überlast werden die zusätzlichen HSMs wieder freigegeben.

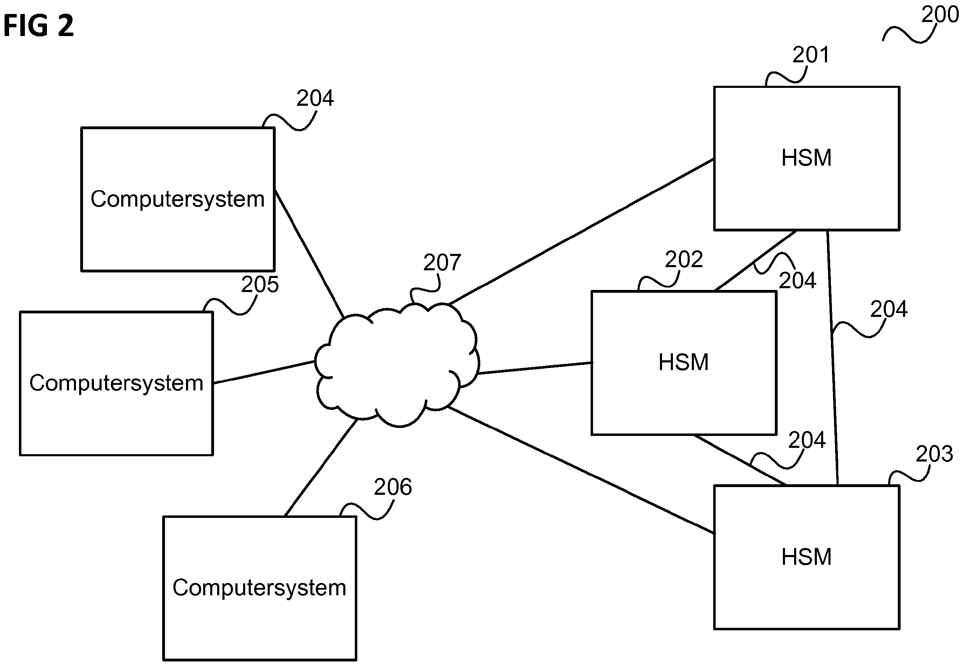

Figur 2 zeigt eine Datenverarbeitungsanordnung 200 mit mehreren Hardware-Sicherheitsmodulen (HSMs) 201, 202, 203.

Es sind in diesem Beispiel drei HSMs 201, 202, 203 vorgesehen, es können aber auch lediglich zwei oder auch eine höhere Anzahl von HSMs vorgesehen sein.

Die HSMs 201, 202, 203 sind untereinander über Kommunikationsverbindung 204 verbunden, beispielsweise vollständig oder auch nur teilweise oder gemäß anderen Topologien wie einer Ringtopologie.

Die HSMs 201, 202, 203 sind in diesem Beispiel mit mehreren Computersystemen 204, 205, 206 verbunden, beispielsweise über ein Computernetzwerk 207. Sie können aber auch zumindest teilweise in den Computersystemen 204, 205, 206 vorgesehen sein und über Kommunikationsverbindungen zwischen den Computersystemen 204, 205, 206 miteinander verbunden sein. Die Kommunikationsverbindungen zwischen den HSMs 201, 202, 203 untereinander und zwischen den HSMs 201, 202, 203 und den Computersystemen 204, 205, 206 sind beispielsweise entsprechend Computerbusse oder Netzwerkverbindungen.

Jedes HSM 201, 202, 203 weist beispielsweise die oben für das HSM 101 beschriebenen Funktionen und Mechanismen auf. Insbesondere bietet jedes HSM 201, 202, 203 eine sichere Umgebung für die Ausführung kryptographischer Operationen. Dazu bietet jedes HSM 201, 202, 203 Hardwareschutz für die Ausführung kryptographischer Algorithmen, beispielsweise unter Verwendung geheimer kryptographischer Schlüssel.

Gemäß verschiedenen Ausführungsformen kann jedes HSM 201, 202, 203 von verschiedenen Computersystemen 204, 205, 206 verwendet werden, d.h. Aufträge von verschiedenen (beispielsweise allen) Computersystemen 204, 205, 206 empfangen und bearbeiten. Beispielsweise entsprechen die verschiedenen Computersysteme 204, 205, 206 verschiedenen Kunden und jedes HSM 201, 202, 203 kann von verschiedenen Kunden verwendet werden. Dies wird auch als Mehr-Mandantenfähigkeit (oder engl. Multi-Tenancy) bezeichnet. Dabei kann ein Kunde (bzw. ein Computersystem 204, 205, 206) ein HSM 201, 202, 203 in Beschlag nehmen und zu einem beliebigen Zeitpunkt wieder freigeben. Nach erfolgter Freigabe kann ein anderer Kunde das HSM verwenden.

Gemäß einer Ausführungsform wird eine Skalierbarkeit der HSMs 201, 202, 203 unterstützt. Dies bedeutet, das jedes HSM 201, 202, 203 bei Bedarf ein oder mehrere weitere HSMs 201, 202, 203 während des Betriebs umkonfigurieren kann und zur Unterstützung der Bearbeitung aktuellen Aufträge heranziehen kann. Dadurch ist eine automatisierte Parallelisierung von komplexen Aufträgen möglich. Die Kommunikation zwischen den HSMs 201, 202, 203 kann dabei auf einem abgesicherten Peer-to-Peer-Ansatz basieren, der keinen zentralen Server oder übergeordnete Softwareschicht benötigt. Die Kommunikation ist beispielsweise besonders abgesichert und die Sicherheit der Verschlüsselung kann ebenfalls skalierbar sein. Die Kommunikation kann zusätzlich in verschiedene, unabhängige Sitzungen verteilt werden (nach einem Secret-Sharing-Prinzip). Ein Angreifer, der Informationen über die Kommunikation erlangen möchte, müsste in diesem Falle jede dieser Sitzungen erfolgreich attackieren.

Zwischen dem Anfragensteller (d.h. einem Computersystem 204, 205, 206, das einen Auftrag sendet) und einem HSM 201, 202, 203 ist eine sichere Kommunikation vorgesehen. Die Kommunikation von und zum HSM 202, 202, 203 wird beispielsweise über einen sicheren Kommunikationskanal realisiert. Dies kann ein Nutzerkonzept, eine Zugriffskontrolle und eine Transaktionsauthentisierung einschließen.

Jedes HSM 201, 202, 203 verfügt gemäß einer Ausführungsform über eine sichere Warteschlange für eingehende Aufträge. Die Warteschlange wird gegen mögliche Angriffe abgesichert. Neben der Vertraulichkeit werden Authentizität, Vollständigkeit und korrekte Abarbeitung der Aufträge in der korrekten Reihenfolge (z.B. entsprechend ihres Eingangs) garantiert. Es kann in den HSMs ferner ein sicheres internes Routing vorgesehen sein.

Jedes HSM 201, 202, 203 kann bei Überlast eine Lastverteilung auf ein oder mehrere andere HSMs 201, 202, 203 anwenden, d.h. einen oder mehrere Aufträge auf ein oder mehrere andere HSMs 201, 202, 203 auslagern. Dabei kann das HSM 201, 202, 203 eine anstehende Last (z.B. Aufträge in seiner Warteschlange) auf weitere bereits verfügbare und entsprechend konfigurierte andere HSMs 201, 202, 203 umleiten. Dabei stellt es Vertraulichkeit, Authentizität und Vollständigkeit sicher.

Wie in Bezug auf Figur 1 beschrieben ist, ist jedes HSM 201, 202, 203 eine Vorrichtung, die mittels hardwarebasierter Sicherheitsvorkehrungen gegen logische und physische Angriffe (insbesondere auch Seitenkanalangriffe) geschützt ist. Insbesondere können die HSMs 201, 202, 203 separate, durch jeweilige (separate) Hardware implementierte und gesicherte Vorrichtungen sein. Erkennt ein HSM 201, 202, 203 einen Angriff, der eine Sicherheitsvorkehrungen durchbricht (z.B. mittels eines entsprechenden Sensors), wie das gewaltsame Öffnen des Gehäuses des HSM 201, 202, 203), so kann beispielsweise vorgesehen sein, dass das HSM 201, 202, 203 alle sicherheitsrelevanten Informationen, die in ihm gespeichert sind, wie beispielsweise kryptographische Schlüssel, vollständig löscht.

Hinsichtlich des von den HSMs realisierten Schlüsselmanagements (Schlüsselverwaltung) kann beispielsweise jedes HSM 201, 202, 203 zu verwendenden (kryptographische) Schlüssel importieren und in einem sicheren Bereich intern abspeichern. Es kann jeden Schlüssel auf Authentizität und Integrität prüfen. Zu jedem Schlüssel kann es zusätzlich Metadaten speichern, die z.B. den zu für den Schlüssel zu verwendenden kryptographischen Algorithmus, den Zweck des Schlüssels etc. angeben. Sind solche Metadaten vorhanden, prüft das HSM 201, 202, 203 vor jeder Verwendung des Schlüssels prüft es in diesem Fall den befugten Gebrauch des Schlüssels anhand dieser Metadaten.

In jedes HSM 201, 202, 203 kann unterschiedliche Krypto-Hardware eingebunden sein. Beispielsweise können zur effizienten und sicheren Verarbeitung wird Spezialhardware und/oder ein oder mehrere Koprozessoren in der Krypto-Einheit 106 eingesetzt werden. Die Krypto-Einheit 106 kann auf jeweilige zu verwende Krypto-Algorithmen optimiert sein und beispielsweise ausschließlich die benötigten Verfahren umgesetzt, d.h. auf die Unterstützung nicht verwendeter Verfahren verzichtet.

Die HSMs 201, 202, 203 können es unterstützen, dass ihr Status (z.B jederzeit) durch einen externen Dienst, beispielsweise durch einen der Computersysteme 201, 202, 203, geprüft wird (engl. als remote Attestation bezeichnet). Diese Prüfung erfolgt kryptographisch abgesichert, beispielsweise durch ein Challenge- Response Protokoll.

Die HSMs 201, 202, 203 können den Rückruf von Schlüsseln (engl. Key Revocation) unterstützen. Beispielsweise prüft das HSM 201, 202, 203 ein Ablaufdatum in den Metadaten eines Schlüssels und verwirft ihn, wenn er abgelaufen ist. Dies kann auch mittels einer Signatur erfolgen, die eine zeitlich begrenzte Gültigkeit hat. Es kann auch ein gesamter Schlüsselbund, der von dem HSM 201, 202, 203 verwendet wird, zeitlich begrenzt signiert werden. Dann hängt die Gültigkeit einzelner Schlüssel des Bundes von der Gültigkeit der Signatur ab. Beispielsweise müssen der oder die Schlüssel von Zeit zu Zeit neu signiert werden, um gültig signiert zu bleiben. Wenn die Gültigkeit der Signatur abgelaufen ist, d.h. ein entsprechendes Datum überschritten ist, so verweigert das HSM 201, 202, 203 die Verwendung des Schlüssels oder der Schüssel. Da ein Schlüssel nur innerhalb eines einzigen HSMs 201, 202, 203 verwendet werden kann, wird so ein Rückruf ermöglicht.

Die HSMs 201, 202, 203 können, alternativ zur Verwendung separater Hardware, auch in einer gemeinsamen Vorrichtung realisiert sein. Beispielsweise realisiert ein Computersystem mehrere HSMs 201, 202, 203. Die HSMs 201, 202, 203 können in diesem Fall als virtuelle HSMs 201, 202, 203 eines HSM-Diensts, der von dem Computersystem bereitgestellt wird, oder auch als mehrere HSM-Instanzen angesehen werden. Beispielsweise werden Komponenten (wie die Krypto-Einheit 106) der HSMs 201, 202, 203 von einem gemeinsamen Prozessor realisiert. Nichtsdestotrotz weist das Computersystem Hardware-Schutzmaßnahmen, d.h. durch Hardware geschützte Verarbeitungsumgebungen auf, um die HSMs 201, 202, 203 zu realisieren und die Domänen der einzelnen HSMs 201, 202, 203 sind wie im Fall separater Hardware voneinander geschützt, beispielsweise derart, dass geheime Daten nicht in Klartext aus die Domäne eines HSMs 201, 202, 203 verlässt.

Gemäß einer Ausführungsform ermöglichen die HSMs 201, 202, 203 eine flexible Ansteuerung von außen. Eingabe eines HSMs 201, 202, 203 ist ein Auftrag 104 (beispielsweise für eine zu sichernde Transaktion zwischen Benutzern) mit all seinen zur Bearbeitung notwendigen Parametern. Die genaue Spezifikation kann unabhängig vom Design der HSMs 201, 202, 203 gewählt werden. Die Ausgabe 108 des HSMs 201, 202, 203 ist das Ergebnis der Bearbeitung des Auftrags und kann auch die Status beinhalten, der anzeigt, ob der Auftrag erfolgreich abgearbeitet wurde oder ob es zu einem Fehler kam. In einer Ausführungsform werden die genauen Fehlerdetails aus Sicherheitsgründen nicht über die Schnittstelle 105 zusammen mit dem Ergebnis 108 versendet, sondern sind über den einen Überwachungsdienst oder Protokollierdienst abfragbar. Der Status kann aus Sicherheitsgründen gegen unbefugtes Auslesen geschützt sein.

Im Folgenden wird ein Beispiel für die Architektur eines HSMs 201, 202, 203 beschrieben.

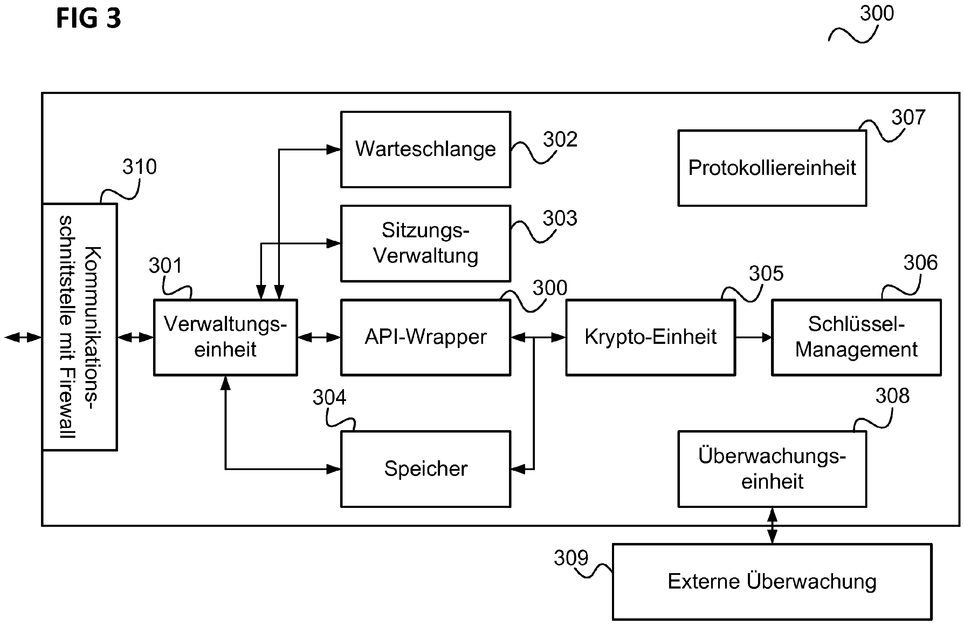

Figur 3 zeigt ein HSM 300.

Der HSM 300 weist eine Verwaltungseinheit 301 auf, die die Steuerlogik des Gesamtsystems (d.h. des gesamten HSMs 300) enthält. Sie steuert unter anderem die gesamte Kommunikation innerhalb des HSMs 300, aber auch mit der Außenwelt, d.h. externen Vorrichtungen wie anderen HSMs 201, 202, 203 und Computersystemen 204, 205, 206.

Zum Zwischenspeichern von eingehenden Aufträgen weist das HSM 300 eine Warteschlange 302 auf. Dort werden eingehende Aufträge (z.B. für Transaktionen) nach eingehender Prüfung abgelegt. Je nach Ausprägung des Systems kann eine FIFO (First In First Out)-Warteschlange, eine randomisierte Warteschlange oder eine Warteschlange mit Prioritätenliste verwendet werden.

Eine Sitzungsverwaltungseinheit (engl. Session Handler) 303 des HSMs 300 öffnet zur Bearbeitung eines Auftrags eine Sitzung. Eine Sitzung kann eine vertrauliche und authentifizierte und bidirektionale Kommunikation, z.B. mit einem anderen HSM, bereitstellen. Verschiedene Sitzungen sind unabhängig voneinander, sodass, sollte eine Sitzung kompromittiert werden, dies keine Auswirkungen auf andere Sitzungen hat.

Das HSM 300 enthält ferner einen Speicher 304 für Parameter. Jedes HSM 201, 202, 203 verfügt über einen Satz an Parametern. Hierzu zählen
- funktionale Parameter: Zu den funktionalen Parametern zählen alle Parameter, die für eine zuverlässige Kommunikation mit dem HSM notwendig sind. Zum Beispiel zählen hierzu Werte wie die IP-Adresse des HSMs, eine Angabe des verwendeten Kommunikationsprotokolls etc. Diese Parameter sind nicht notwendigerweise sicherheitsrelevant.
- Parameter zur Administration: Zur Administration werden bestimmte Funktionalitäten und Zugänge zu dem HSM benötigt. Hierzu zählen z.B. die Zugangsdaten (engl. credentials) der Administratoren des HSMs. Diese Parameter sind sicherheitsrelevant und werden entsprechend geschützt.
- Parameter zur Definition der Schnittstelle: Das HSM kann so konfiguriert werden, dass bestimmte Dienste angeboten, eingeschränkt angeboten oder gar nicht angeboten werden. Diese Konfiguration kann statisch erfolgen, d.h. durch ein festes Regelwerk. Die Konfiguration kann aber auch dynamisch z.B. abhängig von der aktuellen Sitzung erfolgen.
- Schlüssel zur internen Absicherung: Ein HSM verwendet z.B. zur Authentifizierung gegenüber anderen HSMs geheime Daten wie z.B. Schlüsselmaterial und Attribut-Zertifikate. Diese Daten werden sicher erzeugt, sicher in das HSM eingebracht und dort sicher abgelegt. Der Zugriff auf diese Daten erfolgt ausschließlich durch HSM-interne Protokolle. Diese Parameter sind sicherheitsrelevant und werden entsprechend geschützt.
- Benutzerschlüssel: Je nach Einsatzszenario werden im HSM Benutzerschlüssel verwendet. Unabhängig von den konkret verwendeten Krypto-Verfahren werden die Vertraulichkeit der privaten Schlüssel sowie die Authentizität aller Schlüssel sichergestellt.

Als Kern weist das HSM 300 eine Krypto-Einheit 305 auf. Die Krypto-Einheit 305 führt die verschiedenen Krypto-Verfahren aus. Um sensitive Daten wie z.B. Schlüssel zu schützen, ist die Krypto-Einheit 305 durch hardwarebasierte Schutzmaßnahmen abgesichert. Neben der physischen Sicherheit wird die korrekte und die performante Umsetzung bzw. Ausführung der Kryptoverfahren sichergestellt. Der gesamte Inhalt der Krypto-Einheit 305 (d.h. darin zur Verarbeitung gespeicherte Daten) ist sicherheitsrelevant und durch entsprechende hardwarebasierte Schutzmaßnahmen abgesichert.

Ein API(Application Programming Interface)-Wrapper 306 des HSMs kann die definierten Benutzertransaktionen in hardwarespezifische Kommandos umwandeln. So ist es möglich, unterschiedliche Krypto-Einheiten für den Betrieb zu verwenden.

Das HSM 300 weist außerdem eine Schlüsselverwaltungseinheit 306 auf, die die für bestimmten Funktionalitäten (insbesondere die durchgeführten Kryptoverfahren) zu verwendenden Schlüssel speichert und verwaltet. Neben der zuverlässigen Speicherung der Schlüssel unterstützt sie auch Funktionalitäten wie das Aktualisierung von Schlüsseln, z.B. das Austauschen von Schlüsseln auf regelmäßiger Basis oder auf Reaktion auf einen entsprechen Auslöser, Rückruf, das Erklären eines Schlüssels als ungültig, und das sichere Löschen, bei dem ein Schlüssel unwiederbringlich gelöscht wird.

Eine Protokolliereinheit 307 (Logging-Einheit) protokolliert die im HSM 300 ausgeführten Operationen. Das Protokoll enthält dabei keine vertraulichen Daten wie z.B. Schlüssel. Die Vollständigkeit und die Authentizität der Einträge des Protokolls werden abgesichert. Es kann ein Export des Protokolls zur externen Analyse und Speicherung, beispielsweise durch Zugriff mittels eines Protokoll-Diensts vorgesehen sein.

Eine Überwachungseinheit 308 überwacht den Zustand der übrigen Komponenten des HSMs 300. So überprüft sie beispielsweise die Authentizität und Vollständigkeit der Protokolle der Protokolliereinheit 307, den Zustand der Krypto-Einheit 305 und der Warteschlange 302. Im Falle kritischer Zustände wie z.B. dem Kompromittieren der Krypto-Einheit 305 schickt sie Nachrichten an konfigurierbare Empfänger (z.B. per Netzwerk, Funknetze, Telefonnetze oder Satellit) zur externen Überwachung 309. Vorrichtungen zur externen Überwachung 309 können mittels der Überwachungseinheit Informationen über den Zustand des HSMs 300 auch von außen abfragen.

Zur Kommunikation mit anderen Geräten, z.B. anderen HSMs 201, 202, 203 und Computersystemen 204, 205, 205 weist das HSM 300 eine Kommunikationsschnittstelle 310 auf. Die Kommunikationsschnittstelle 310 ist mit einer Firewall versehen, die die Kommunikation des HSMs 300 mit den anderen Geräten reguliert. So können z.B. netzwerkbasierte Angriffe wie z.B. DoS(Denial of Service)-Angriffe abgewehrt werden.

Die verschiedenen funktionalen Einheiten des HSMs 300 wie Verwaltungseinheit 301, Sitzungsverwaltungseinheit 303, API-Wrapper 306, Schlüsselverwaltungseinheit 306, Protokolliereinheit 307, Überwachungseinheit 308 und Kommunikationsschnittstelle 310 können durch ein oder mehrere programmierte Prozessoren und gegebenenfalls entsprechende Speicher (und entsprechend als logische Komponenten angesehen werden) oder auch durch hartverdrahtete Schaltungen realisiert werden.

Die Verwaltungseinheit 301 entscheidet beispielsweise über das Auslagern von Aufträgen an ein anderes HSM. Dazu prüft sie beispielsweise den Zustand der Warteschlange und entscheidet, dass ein Auftrag ausgelagert werden soll, wenn der Füllstand der Warteschlange über einem vorgegebenen Schwellwert liegt. Die Verwaltungseinheit 301 kann beispielsweise durch Zugriff auf den Speicher 304 in Erfahrung bringen, welche andere HSMs vorhanden sind und wie sie erreicht werden können. Beispielsweise sind dazu entsprechende Informationen (wie z.B. IP- oder TCP-Adressen von anderen HSMs) im Speicher 304 abgelegt.

Das HSM 300 verwendet verschiedene Objekte wie beispielsweise ein oder mehrere
- Sitzungs-Objekte: Ein Session-Objekt wird für jede Sitzung erstellt und enthält die folgenden Daten
   ∘ Sitzungs-ID: Eindeutiger Identifikator der Sitzung. Die Eindeutigkeit ist jedoch kein Sicherheitsmerkmal.
   ∘ Sitzungs-Schlüssel: Eindeutiger, vertraulicher Schlüssel der Sitzung. Aus diesem Schlüssel können z.B. Arbeitsschlüssel für die verschiedenen Schutzziele hergeleitet werden.
- Zertifikate, wie beispielsweise das Root-Zertifikat HSM-AUTH-ROOT-ZERT für das Überprüfen der Authentizitäts-Zertifikatskette, z.B. zur gegenseitigen Authentifizierung von HSMs.
- Kryptographische Schlüssel, wie beispielsweise einen vertraulichen Schlüssel HSM-AUTH-KEY zum Beweisen der Authentizität des HSMs 300.
- DH(Diffie-Hellmann)-Parameter, z.B.
   ∘ DH Generator: Generator der DH Gruppe
   ∘ DH-Gruppen- Parameter: Parameter der DH Gruppe (z.B. Modul, EC (Elliptic Curve), ...)

Im Folgenden werden für die Komponenten des HSMs 300 verwendete Prozesse und Protokolle beschrieben. Dies beinhaltet neben den erforderlichen Funktionalitäten auch konkrete Maßnahmen zur Erreichung von Schutzzielen wie Vertraulichkeit, Integrität, Authentizität, Verfügbarkeit, und Verbindlichkeit/Nichtabstreitbarkeit.

Ein Benutzer sendet mittels eines Computersystems 102 einen Auftrag 104 zur Abarbeitung an das HSM 300. Ein Auftrag beinhaltet neben der Beschreibung des Kommandos alle notwendigen Parameter und Daten.

Die Warteschlange 302 ist für die Verwaltung eingehender Aufträge zuständig. Gemäß einer Ausführungsform wird ein FIFO-Ansatz implementiert. Alternativ kann auch eine Optimierungsstrategie operierend auf unabhängigen Aufträgen implementiert werden. Gemäß einer Ausführungsform wird die Warteschlange nicht im sicheren Hardwarebereich des HSMs 300 gespeichert und prozessiert. Die obigen Schutzziele werden hingegen durch geeignete kryptographische Maßnahmen sichergestellt.

Eine Operation zum Einreihen eines Auftrags in die Warteschlange 302 (Enqueue-Operation) nimmt einen neuen Auftrag in die Warteschlange 302 auf. Aus Sicherheitsgründen werden die obigen Sicherheitsziele mit beispielsweise mit den folgenden entsprechenden Maßnahmen angestrebt:
- Vertraulichkeit, d.h. es darf durch die Analyse der aktiven Warteschlange keine Information über die Inhalte von Aufträgen ermittelbar sein. Dazu wird jeder Auftrag verschlüsselt in der Warteschlange gespeichert und jede Antwort (z.B. das Ergebnis 109) wird verschlüsselt an den Absender übertragen.
- Authentizität, d.h. es dürfen nur Aufträge aus authentifizierte Quellen angenommen werden. Dazu werden nur authentifizierte Aufträge aufgenommen. Außerdem wird eine authentifizierte (d.h. signierte) Bestätigung über die Annahme des Auftrags 104 an die Auftragsquelle (Computersystem 102) gesendet und die Antwort 109 wird gegenüber der Auftragsquelle authentifiziert.
- Verfügbarkeit, d.h. die Warteschlange 302 darf nicht als "Single-Point of Failure" die Verfügbarkeit des durch den HSM 300 bereitgestellten Diensts z.B. durch Ausfall oder Überlastung gefährden. Dazu kann die Warteschlange redundant gespeichert werden (z.B. mittels Replikation über mehrere Peers, z.B. mehrere HSMs).
- Verbindlichkeit/Nichtabstreitbarkeit. Dazu wird eine authentifizierte (signierte) Bestätigung über die Annahme eines Auftrags an die Auftragsquelle versendet. Außerdem wird von der Protokolliereinheit 307 ein authentifizierter Eintrag in einem Auftrags-Protokoll angelegt.

Eine Operation zum Entfernen eines Auftrags aus der Warteschlange 302 (Dequeue-Operation) sendet einen Auftrag zur Bearbeitung in die sichere Hardware des HSMs 300 und entfernt den Eintrag aus der Warteschlange 302. Weitere Mechanismen für die Vertraulichkeit, Integrität und Authentizität sind hierbei nicht erforderlich. Zur Verfügbarkeit kann die Warteschlange 302 redundant gespeichert werden (z.B. mittels Replikation über mehrere Peers, z.B. HSMs). Die Dequeue-Operation wird über die redundanten Instanzen repliziert. Zur Verbindlichkeit/Nichtabstreitbarkeit registriert die Protokolliereinheit 307 die Ausführung des Auftrags in einem Protokoll (z.B. einer Log-Datei). Dieses enthält beispielsweise den Auftraggeber, den Zeitpunkt der Aufnahme in die Warteschlange, den Zeitpunkt des Entfernens aus der Warteschlange und Informationen über die Verkettung des Ablaufs, z.B. Informationen über den Zusammenhang mit anderen durchgeführten Operationen (z.B. Querverweise).

Zur Lastverteilung auf ein anderes HSM 201, 202, 203 sucht das HSM 300 ein anderes HSM 201, 202, 203 und verifiziert zunächst, dass das andere HSM 201, 202, 203 ein gültiges HSM ist. Dafür verwenden das HSM, im Folgenden als verifizierendes HSM bezeichnet, und das andere HSM, im Folgenden als Ziel-HSM bezeichnet, eine HSM-Verifizierungsoperation (z.B. bezeichnet als "Verify SFC-HSM"). Diese Operation verifiziert, dass das Ziel-HSM ein gültiges HSM ist. Dabei wird keine Information darüber offen gelegt, wer das Ziel-HSM aktuell "besitzt" (ownership), d.h. welcher Kunde bzw. welches Computersystem 204, 205, 206 das Ziel-HSM aktuell belegt.

Es wird angenommen, dass wie oben beschrieben das Ziel-HSM mit dem (vertraulichen) Schlüssel HSM-AUTH-KEY ausgestattet ist. Das Ziel-HSM verfügt außerdem über das entsprechende Zertifikat HSM-AUTH-ZERT, welches die Authentizität des Schlüssels HSM-AUTH-KEY beglaubigt. Die Beglaubigung ist Teil einer Zertifikatskette, welche in dem globalen HSM-AUTH-ROOT-ZERT endet. Das verifizierende HSM verfügt über das Zertifikat HSM-AUTH-ROOT-ZERT.

Das verifizierende HSM ist nicht überzeugt (d.h. verifiziert nicht erfolgreich), dass es sich bei dem Ziel-HSM um ein gültiges HSM handelt, falls die HSM-Verifizierungsoperation fehlschlägt. Das verifizierende HSM ist überzeugt (d.h. verifiziert erfolgreich), dass es sich bei dem Ziel-HSM um ein gültiges HSM handelt, falls die HSM-Verifizierungsoperation erfolgreich war und als Folge ein Sitzungs-Objekt erzeugt wurde. Das Sitzungs-Objekts ermöglicht den Aufbau einer sicheren Kommunikationssitzung zwischen dem verifizierenden HSM und dem Ziel-HSM aufgebaut werden.

Die Eingabe für die HSM-Verifizierungsoperation ist die Adresse des Ziel-HSMs (z.B. die TCP Adresse). Die Ausgabe der HSM-Verifzierungsoperation ist "Fehler", falls die Verifikation fehlschlägt. Falls die Verifikation erfolgreich ist, wird ein Sitzungs-Objekt zurückgegeben.

Aus Sicherheitsgründen werden die obigen Sicherheitsziele beispielsweise mit den folgenden entsprechenden Maßnahmen angestrebt:
- Vertraulichkeit: Es ist vorgesehen, dass keinerlei Information über vertrauliches Schlüsselmaterial, Einstellungen eines HSMs oder darüber, wer das HSM besitzt (Ownership) für Außenstehende einsehbar ist. Dies wird beispielsweise durch folgende Maßnahmen erreicht:
   ∘ Das zwischen dem verifizierenden HSM und dem Ziel-HSM zur Verifikation verwendete Synchronisations-Protokoll verwendet geeignete Verschlüsselungsmaßnahmen.
   ∘ Die dazu verwendeten Schlüssel basieren auf einem vorpersonalisierten Schlüsselsatz.
   ∘ Das Synchronisations-Protokoll ist richtungsspezifisch und sitzungsbasiert und hat die Forward-Secrecy-Eigenschaft.
- Authentizität: Die Authentizität der Daten aller zur Verifikation zwischen dem verifizierenden HSM und dem Ziel-HSM ausgetauschten Nachrichten wird durch Signaturen (oder alternativ MACs (Message Authentication Codes)) sichergestellt. Die Authentizität wird für jede Nachricht direkt nach dem Erhalt zu prüfen. Schlägt die Prüfung fehl, so wird die HSM-Verifzierungsoperation (mit Fehlernachricht) abgebrochen.
- Verfügbarkeit: Nicht zutreffend. Verfügbarkeit der eingegangenen Aufträge kann dadurch erreicht werden, dass die Warteschlange 302 redundant gespeichert wird.
- Verbindlichkeit/Nichtabstreitbarkeit. Dazu wird eine authentifizierte (signierte) Bestätigung über die Annahme eines Auftrags an die Auftragsquelle versendet. Außerdem wird von der Protokolliereinheit 307 ein authentifizierter (signierter) Eintrag in einem Auftrags-Protokoll angelegt.

Tabelle 1 zeigt ein Beispiel für den Ablauf einer HSM-Verifizierungsoperation in Pseudocode. Dabei bezeichnet V das verifizierende HSM und P (für Proofer) das Ziel-HSM. Wenn nur die Quelle angegeben ist und kein Ziel, handelt es sich um eine in der Quelle durchgeführte Operation, sonst um die Übertragung einer Nachricht in der durch den Pfeil "→" angegebenen Richtung. Der Pfeil "←" bezeichnet das Bilden der links vom Pfeil stehenden Nachricht mit dem rechts vom Pfeil stehenden Inhalt.

**Tabelle 1**

| | Quelle | | Ziel | Übertragene Nachricht bzw. durchgeführte Operation |
|---|---|---|---|---|
| (1) | V | → | P | StartVerAuth (enthält Challenge c) |
| (2) | P | | | M←HSM-AUTH-ZERT,c |
| (3) | P | → | V | S←SIG[HSM-AUTH-KEY] {M} |
| (4) | V | | | Verifiziere S |
| (5) | V | | | Verifiziere c |
| (6) | V | | | Verifiziere HSM-AUTH-ZERT |
| (7) | V | | | M←DH-Schlüsselaustauschnachricht 1 |
| (8) | V | → | P | S←SIG[HSM-AUTH-KEY] {M} |
| (9) | P | | | M←DH-Schlüsselaustauschnachricht 2 |
| (10) | P | → | V | S←SIG[HSM-AUTH-KEY] {M} |

In (2) steht HSM-AUTH-ZERT für HSM-AUTH-ZERT und alle weiteren Zertifikate der Zertifikatskette. (7) bis (9) zum DH-Schlüsselaustausch werden durchgeführt, wenn die Verifikationen von (4) bis (6) erfolgreich waren.

Gemäß einer Ausführungsform ist zur Lastverteilung weiterhin eine Operation vorgesehen, mittels welcher das verifizierende HSM verifiziert, dass ein Ziel-HSM ein gültiges HSM ist und dass es sich im Besitz eines spezifischen Kunden bzw. Computersystems 204, 205, 206 befindet (Ownership), d.h. aktuell von einem bestimmten Kunden oder Computersystem belegt ist. Diese Operation wird z.B. mit "Verify Kunden-HSM" bezeichnet.

Ergänzend kann eine als "isFree"-Operation bezeichnete Operation vorgesehen sein, mittels welcher ein HSM feststellen kann, ob ein Ziel-HSM frei ist (d.h. aktuell nicht belegt ist).

Für die Operation "Verify Kunden-HSM" wird angenommen, dass das Ziel-HSM mit dem (vertraulichen) Schlüssel HSM-AUTH-KEY ausgestattet ist. Das Ziel-HSM verfügt außerdem über das entsprechende Zertifikat HSM-AUTH-ZERT, welches die Authentizität des Schlüssels HSM-AUTH-KEY beglaubigt. Die Beglaubigung ist Teil einer Zertifikatskette, welche in dem globalen HSM-AUTH-ROOT-ZERT endet. Das verifizierende HSM verfügt über das Zertifikat HSM-AUTH-ROOT-ZERT.

Der Besitz, auf den das verifizierende HSM prüft, ist beispielsweise, ob das Ziel-HSM im Besitz desselben Kunden ist, wie das verifizierende HSM selbst.

Wenn das Ziel-HSM von einem spezifischen Kunden in Besitz genommen wurde, so verfügt das Ziel-HSM über einen Konfigurationsdatensatz, der alle individuellen Einstellungen und Schlüssel (für den Kunden) umfasst. Jedes HSM implementiert einen Algorithmus, der eine kryptographische Prüfsumme über den Konfigurationssatz erstellt. Die Prüfsumme ist eindeutig, kollisionsresistent und lässt keine Rückschlüsse über die Inhalte der Konfiguration zu.

Ruft das verifizierende HSM vom Ziel-HSM eine entsprechende Prüfsumme ab, um zu verifizierenden, dass das Ziel-HSM von einem spezifischen Kunden belegt ist, so sind dafür beispielsweise Nonces auf beiden Seiten vorgesehen: Auf Seite des verifizierenden HSMs um Replay-Attacken zu verhindern und auf Seiten des Ziel-HSMs um Vertraulichkeit sicherzustellen. Vergleiche verschiedener Algorithmen-Ausgaben sollen keinen Rückschluss z.B. auf Gleichheit oder Ungleichheit erlauben.

Das verifizierende HSM ist nicht überzeugt, dass es sich bei dem Ziel-HSM um ein gültiges HSM im jeweiligen Besitz handelt, falls die Kunden-HSM-Verifizierungsoperation fehlschlägt. Das verifizierende HSM ist überzeugt, dass es sich bei dem Ziel-HSM um ein gültiges HSM im jeweiligen Besitz handelt, falls die HSM-Verifizierungsoperation erfolgreich war und als Folge ein Sitzungs-Objekt erzeugt wurde. Das Sitzungs-Objekts ermöglicht den Aufbau einer sicheren Kommunikationssitzung zwischen dem verifizierenden HSM und dem Ziel-HSM aufgebaut werden.

Die Eingabe für die Kunden-HSM-Verifzierungsoperation ist die Adresse des Ziel-HSMs (z.B. die IP Adresse). Die Ausgabe der Kunden-HSM-Verifzierungsoperation ist "Fehler", falls die Verifikation fehlschlägt. Falls die Verifikation erfolgreich ist, wird ein Sitzungs-Objekt zurückgegeben.

Aus Sicherheitsgründen werden die obigen Sicherheitsziele mit beispielsweise mit den folgenden entsprechenden Maßnahmen angestrebt:
- Vertraulichkeit: Es ist vorgesehen, dass keinerlei Information über vertrauliches Schlüsselmaterial, Einstellungen eines HSMs oder darüber, wer das HSM besitzt (Ownership) für Außenstehende einsehbar ist. Dies wird beispielsweise durch folgende Maßnahmen erreicht:
   ∘ Das zwischen dem verifizierenden HSM und dem Ziel-HSM zur Verifikation verwendete Synchronisations-Protokoll verwendet geeignete Verschlüsselungsmaßnahmen.
   ∘ Die dazu verwendeten Schlüssel basieren auf einem vorpersonalisierten Schlüsselsatz.
   ∘ Das Synchronisations-Protokoll ist richtungsspezifisch und sitzungsbasiert und hat die Forward-Secrecy-Eigenschaft.
   ∘ Die Prüfsumme wird so randomisiert, dass keinerlei Rückschlüsse auf Änderungen an der Konfiguration anhand von Protokollmitschnitten möglich sind. Das heißt, dass von beiden Parteien (verifizierendem HSM und Ziel-HSM) Zufallswerte in den Protokollablauf eingebracht werden, die verhindern, dass Informationen über den internen Zustand des Ziel-HSMs anhand von Protokollmitschnitten ableitbar sind.
- Authentizität: Die Authentizität der Daten aller zur Verifikation zwischen dem verifizierenden HSM und dem Ziel-HSM ausgetauschten Nachrichten wird durch Signaturen (oder alternativ MACs (Message Authentication Codes)) sichergestellt. Die Authentizität wird für jede Nachricht direkt nach dem Erhalt geprüft. Schlägt die Prüfung fehl, so wird die HSM-Verifzierungsoperation (mit Fehlernachricht) abgebrochen.
- Verfügbarkeit: Nicht zutreffend. Verfügbarkeit der eingegangenen Aufträge kann dadurch erreicht werden, dass die Warteschlange 302 redundant gespeichert wird (z.B. mittels Replikation über mehrere Peers, d.h. HSMs).
- Verbindlichkeit/Nichtabstreitbarkeit. Dazu wird eine authentifizierte (signierte) Bestätigung über die Annahme eines Auftrags an die Auftragsquelle versendet. Außerdem wird von der Protokolliereinheit 307 ein authentifizierter Eintrag in einem Auftrags-Protokoll angelegt.

Tabelle 2 zeigt ein Beispiel für den Ablauf einer Kunden-HSM-Verifizierungsoperation in Pseudocode. Wie bei Tabelle 1 bezeichnet V das verifizierende HSM und P das Ziel-HSM. Wenn nur die Quelle angegeben ist und kein Ziel, handelt es sich um eine in der Quelle durchgeführte Operation, sonst um die Übertragung einer Nachricht in der durch den Pfeil "→" angegebenen Richtung. Der Pfeil "←" bezeichnet das Bilden der links vom Pfeil stehenden Nachricht mit dem rechts vom Pfeil stehenden Inhalt.

**Tabelle 2**

| | Quelle | | Ziel | Übertragene Nachricht bzw. durchgeführte Operation |
|---|---|---|---|---|
| (1) | V | → | P | StartVerAuth (enthält Challenge c) |
| (2) | P | | | M←HSM-AUTH-ZERT,c |
| (3) | P | → | V | S←SIG[HSM-AUTH-KEY] {M} |
| (4) | V | | | Verifiziere S |
| (5) | V | | | Verifiziere c |
| (6) | V | | | Verifiziere HSM-AUTH-ZERT |
| (7) | V | | | M←DH-Schlüsselaustauschnachricht 1 |
| (8) | V | → | P | S←SIG[HSM-AUTH-KEY] {M} |
| (9) | P | | | M←DH-Schlüsselaustauschnachricht 2 |
| (10) | P | → | V | S←SIG[HSM-AUTH-KEY] {M} |

In (2) steht HSM-AUTH-ZERT für HSM-AUTH-ZERT und alle weiteren Zertifikate der Zertifikatskette. (7) bis (9) zum DH-Schlüsselaustausch werden durchgeführt, wenn die Verifikationen von (4) bis (6) erfolgreich waren.

Zur Verteilung eines Auftrags von einem HSM (im Folgenden als Quellen-HSM bezeichnet) auf ein anderes HSM (im Folgenden als Ziel-HSM) bezeichnet kann das Quellen-HSM (konkreter Hardware), das für die Abarbeitung von Aufträgen für einen bestimmten Kunden (bzw. Computersystem 204, 205, 206) entsprechend personalisierte sein kann z.B. aus Performancegründen auf das Ziel-HSM geklont werden. Dabei werden alle kundenspezifischen Daten, Einstellungen und Schlüssel aus dem sicheren Bereich des Quellen-HSMs in den sicheren Bereich des Ziel-HSMs gesendet. Zu beachten ist hierbei, dass sensitives Schlüsselmaterial aus der Hardware exportiert werden muss (dies kann zertifizierungsrelevant sein). Das Ziel-HSM ist nach erfolgreichem Ausführen dieser Operation gleichwertig zu dem Quell-HSM.

Die Klon-Operation startet den Klon-Prozess, der beispielsweise das Folgende aufweist:
1. Auffinden eines Potentiellen Ziel-HSMs
2. Synchronisieren der Einstellungen und Schlüssel
3. Verifikation der Synchronisation

Aus Sicherheitsgründen werden die obigen Sicherheitsziele mit beispielsweise mit den folgenden entsprechenden Maßnahmen angestrebt:
- Vertraulichkeit: Es ist vorgesehen, dass keinerlei Information über vertrauliches Schlüsselmaterial, Einstellungen eines HSMs oder darüber, wer das HSM besitzt (Ownership) für Außenstehende einsehbar ist. Dies wird beispielsweise durch folgende Maßnahmen erreicht:
   ∘ Das zwischen dem Quellen-HSM und dem Ziel-HSM verwendete Synchronisations-Protokoll verwendet geeignete Verschlüsselungsmaßnahmen.
   ∘ Die dazu verwendeten Schlüssel basieren auf einem vorpersonalisierten Schlüsselsatz.
   ∘ Das Synchronisations-Protokoll ist richtungsspezifisch und sitzungsbasiert und hat die Forward-Secrecy-Eigenschaft.
- Authentizität:
   ∘ Das Ziel-HSM akzeptiert nur eine Konfiguration von einem authentifizierten Quellen-HSM
   ∘ Das Ziel-HSM versendet eine authentifizierte (d.h. signierte) Bestätigung.
   ∘ Das Quellen-HSM authentifiziert (d.h. verifiziert) jede Antwort vom Ziel-HSM.

Sendet ein Benutzer bzw. ein Computersystem 204, 205, 206 einen Auftrag an ein HSM 300 (z.B. für eine Transaktion), führt das HSM 300 abhängig von seiner Last oder auch der Komplexität des Auftrags gegebenenfalls eine Lastverteilung auf einer oder mehrere andere HSMs durch. Dazu kann das HSM 300 die anderen HSMs mittels der obigen Verifizierung-Operationen verifizieren (d.h. ihre Authentizität überprüfen) und seine Konfiguration mittels der oben beschriebenen Klon-Operation auf die anderen HSMs übertragen.

Alle Tätigkeiten werden von der Protokolliereinheit 307 protokolliert. Das HSM kann die Authentizität und die Vollständigkeit des Protokolls (z.B. periodisch) überprüfen. Ferner kann das HSM (z.B. periodisch eine Statusüberprüfung der Verwaltungs-Einheit 301 und der Warteschlange 302 durchführen.

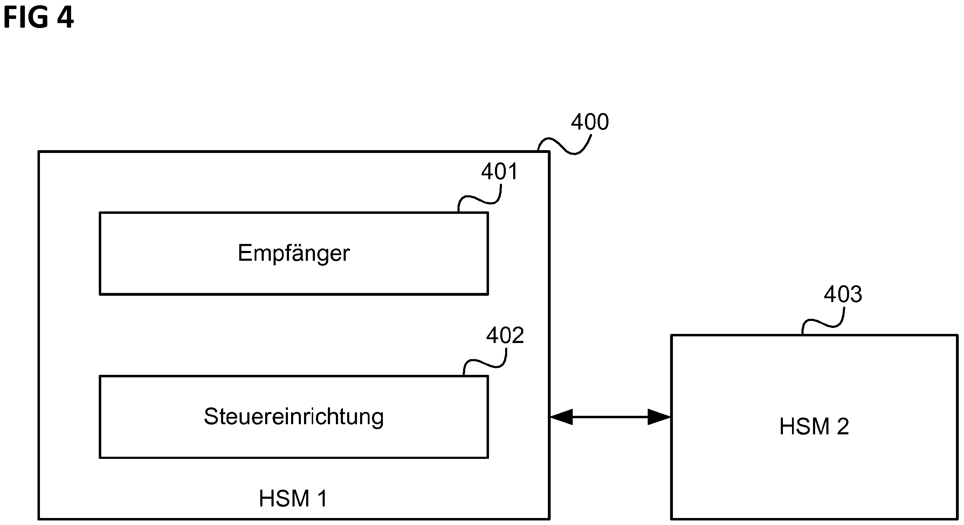

Zusammenfassend wird gemäß verschiedenen Ausführungsformen ein Hardware-Sicherheitsmodul bereitgestellt, wie es in Figur 4 dargestellt ist.

Figur 4 zeigt ein Hardware-Sicherheitsmodul 400.

Das Hardware-Sicherheitsmodul 400 weist einen Empfänger 401 auf, der zum Empfangen von Aufträgen zur Durchführung kryptographischer Operationen eingerichtet ist.

Das Hardware-Sicherheitsmodul 400 weist ferner eine Steuereinrichtung 402 auf, die eingerichtet ist, basierend auf einer Auftragslast des Hardware-Sicherheitsmoduls 400 zu entscheiden, ob ein oder mehrere Aufträge ausgelagert werden sollen.

Die Steuereinrichtung 402 ist ferner eingerichtet, falls ein oder mehrere Aufträge ausgelagert werden sollen, ein anderes Hardware-Sicherheitsmoduls 403 zum Auslagern der ein oder mehreren Aufträge zu ermitteln, das andere Hardware-Sicherheitsmodul 403 zu authentifizieren und die Abarbeitung der ein oder mehreren Aufträge von dem anderen Hardware-Sicherheitsmodul 402 anzufordern.

Gemäß verschiedenen Ausführungsformen wird zum Vermeiden von Verzögerungen bei der Abarbeitung eines Auftrags für eine kryptographische Operation durch ein Hardware-Sicherheitsmodul (HSM) eine Lastverteilung zwischen mehreren HSMs vorgesehen. Dazu wählt das Quellen-HSM, das den Auftrag empfangen hat, ein Ziel-HSM aus, authentifiziert es und fordert von ihm die Abarbeitung des Auftrags an. Durch die Authentifizierung stellt das Quellen-HSM sicher, dass das Ziel-HSM ein authentisches HSM ist, beispielsweise ein entsprechend geschütztes Gerät ist und nicht ein Gerät eines Angreifers, das nur vorgibt, ein HSM zu sein.

Durch die Lastverteilung unter mehreren HSMs wird anschaulich für Benutzer ein HSM-Dienst anstatt einzelner HSMs bereitgestellt oder in anderen Worten eine Cloud aus einzelnen Cloud-fähigen HSMs geschaffen.

Das Hardware-Sicherheitsmodul 400 und das andere Hardware-Sicherheitsmodul 402 sind beispielsweise mit einer Kommunikationsschnittstelle versehen, mittels welcher sie die Authentifizierung durchführen und mittels welcher das Hardware-Sicherheitsmodul 400 von dem anderen Hardware-Sicherheitsmodul 402 die Durchführung ein oder mehreren Aufträgen anfordert. Zur Anforderung eines Auftrags übermittelt das Hardware-Sicherheitsmodul 400 beispielsweise eine Spezifikation des Auftrags an das andere Hardware-Sicherheitsmodul 402 und zur Ausführung des Auftrags erforderliche Daten (z.B. einen verschlüsselten Text und einen Schlüssel). Das Hardware-Sicherheitsmodul 400 kann seine Konfiguration (d.h. Konfigurationsdaten) auf das andere Hardware-Sicherheitsmodul 402 kopieren (anschaulich gesprochen sich klonen). Die Konfigurationsdaten können zur Ausführung des Auftrags erforderliche Daten (z.B. Schlüssel) beinhalten.

Obwohl die Erfindung vor allem unter Bezugnahme auf bestimmte Ausführungsformen gezeigt und beschrieben wurde, sollte es von denjenigen, die mit dem Fachgebiet vertraut sind, verstanden werden, dass zahlreiche Änderungen bezüglich Ausgestaltung und Details daran vorgenommen werden können, ohne vom Wesen und Bereich der Erfindung, wie er durch die nachfolgenden Ansprüche definiert wird, abzuweichen. Der Bereich der Erfindung wird daher durch die angefügten Ansprüche bestimmt, und es ist beabsichtigt, dass sämtliche Änderungen, welche unter den Wortsinn der Ansprüche fallen, umfasst werden.

## Patentansprüche

1. Hardware-Sicherheitsmodul, aufweisend:
einen Empfänger, der zum Empfangen von Aufträgen zur Durchführung kryptographischer Operationen eingerichtet ist und
eine Steuereinrichtung, die eingerichtet ist,
basierend auf einer Auftragslast des Hardware-Sicherheitsmoduls zu entscheiden, ob ein oder mehrere der vom Hardware-Sicherheitsmodul empfangenen Aufträge ausgelagert werden sollen und
falls ein oder mehrere der vom Hardware-Sicherheitsmodul empfangenen Aufträge ausgelagert werden sollen, ein anderes Hardware-Sicherheitsmodul zum Auslagern der ein oder mehreren Aufträge zu ermitteln,
das andere Hardware-Sicherheitsmodul zu authentifizieren und
die Abarbeitung der ein oder mehreren Aufträge von dem anderen Hardware-Sicherheitsmodul anzufordern.

2. Hardware-Sicherheitsmodul gemäß Anspruch 1, wobei die Steuereinrichtung eingerichtet ist, das andere Hardware-Sicherheitsmodul zur Ausführung der ein oder mehreren Aufträge zu konfigurieren.

3. Hardware-Sicherheitsmodul gemäß Anspruch 1 oder 2, wobei die Steuereinrichtung eingerichtet ist, zur Abarbeitung der ein oder mehreren Aufträge durch das andere Hardware-Sicherheitsmodul eine Konfiguration des Hardware-Sicherheitsmoduls auf das andere Hardware-Sicherheitsmodul zu klonen.

4. Hardware-Sicherheitsmodul gemäß einem der Ansprüche 1 bis 3, wobei die Steuereinrichtung eingerichtet ist, die ein oder mehreren Aufträge mittels einer Peer-to-Peer-Kommunikationsverbindung an das andere Hardware-Sicherheitsmodul zu senden.

5. Hardware-Sicherheitsmodul gemäß einem der Ansprüche 1 bis 4, wobei die Steuereinrichtung eingerichtet ist, zu entscheiden, dass ein oder mehrere Aufträge ausgelagert werden sollen, wenn die Auftragslast des Hardware-Sicherheitsmoduls über einem vorgegebenen Schwellwert liegt.

6. Hardware-Sicherheitsmodul gemäß Anspruch 5, aufweisend eine Auftragswarteschlange, wobei die Auftragslast der Füllstand der Auftragswarteschlange ist.

7. Hardware-Sicherheitsmodul gemäß einem der Ansprüche 1 bis 6, wobei die Steuereinrichtung eingerichtet ist, das andere Hardware-Sicherheitsmodul zu allokieren und eingerichtet ist, nach Abarbeitung der ein oder mehreren Aufträge das andere Hardware-Sicherheitsmodul wieder freizugeben.

8. Hardware-Sicherheitsmodul gemäß einem der Ansprüche 1 bis 7, wobei die Steuereinrichtung eingerichtet ist, eine Anzahl der ein oder mehreren Aufträge, die ausgelagert werden sollen, basierend auf der Auftragslast des Hardware-Sicherheitsmoduls zu ermitteln.

9. Hardware-Sicherheitsmodul gemäß einem der Ansprüche 1 bis 8, wobei die Steuereinrichtung eingerichtet ist, so lange zu entscheiden, dass Aufträge ausgelagert werden sollen, bis die Auftragslast des Hardware-Sicherheitsmoduls unter einen vorgegebenen Schwellwert fällt.

10. Hardware-Sicherheitsmodul gemäß einem der Ansprüche 1 bis 9, aufweisend eine Krypto-Einheit, die eingerichtet ist, kryptographische Operationen durchzuführen.

11. Hardware-Sicherheitsmodul gemäß einem der Ansprüche 1 bis 10, wobei die kryptographischen Operationen jeweils eine Entschlüsselung, eine Verschlüsselung, eine Signierung und/oder die Verifikation einer Signatur aufweisen.

12. Hardware-Sicherheitsmodul gemäß einem der Ansprüche 1 bis 11, wobei die Steuereinrichtung eingerichtet ist, das andere Hardware-Sicherheitsmodul basierend auf einer von dem anderen Hardware-Sicherheitsmodul erzeugten Signatur zu authentifizieren.

13. Hardware-Sicherheitsmodul gemäß einem der Ansprüche 1 bis 12, wobei das Hardware-Sicherheitsmodul und das andere Hardware-Sicherheitsmodul getrennte Hardware zur Durchführung der kryptographischen Operationen aufweisen.

14. Hardware-Sicherheitsmodul gemäß einem der Ansprüche 1 bis 13, welches als Peripheriegerät für ein Computersystem (102) eingerichtet ist.

15. Datenverarbeitungsanordnung, aufweisend:
mehrere Hardware-Sicherheitsmodule (201, 202, 203) gemäß einem der Ansprüche 1 bis 14, welche untereinander über eine Kommunikationsverbindung (204) miteinander verbunden sind;
wobei die mehreren Hardware-Sicherheitsmodule mit mehreren Computersystemen (204, 205, 206) verbunden sind oder zumindest teilweise in den Computersystemen (204, 205, 206) integriert sind,
wobei von den mehreren Hardware-Sicherheitsmodulen (201, 202, 203) jedes Hardware-Sicherheitsmodul von verschiedenen Computersystemen (204, 205, 206) der mehreren Computersysteme (204, 205, 206) verwendet werden kann.

## Claims

1. Hardware security module, having:
a receiver that is designed for receiving orders for carrying out cryptographic operations and
a control device that is designed
to decide, based on an order load of the hardware security module, whether one or more of the orders received by the hardware security module are to be delegated and
to identify another hardware security module for delegating the one or more orders if one or more of the orders received by the hardware security module are to be delegated,
to authenticate the other hardware security module and
to request that the one or more orders be processed by the other hardware security module.

2. Hardware security module according to Claim 1, wherein the control device is designed to configure the other hardware security module for executing the one or more orders.

3. Hardware security module according to Claim 1 or 2, wherein the control device is designed to clone a configuration of the hardware security module onto the other hardware security module in order for the one or more orders to be processed by means of the other hardware security module.

4. Hardware security module according to one of Claims 1 to 3, wherein the control device is designed to transmit the one or more orders to the other hardware security module by means of a peer-to-peer communication link.

5. Hardware security module according to one of Claims 1 to 4, wherein the control device is designed to decide that one or more orders are to be delegated when the order load of the hardware security module is above a predefined threshold value.

6. Hardware security module according to Claim 5, having an order queue, wherein the order load is the occupancy level of the order queue.

7. Hardware security module according to one of Claims 1 to 6, wherein the control device is designed to allocate the other hardware security module and is designed to release the other hardware security module again after the one or more orders have been processed.

8. Hardware security module according to one of Claims 1 to 7, wherein the control device is designed to identify, based on the order load of the hardware security module, a number of the one or more orders that are to be delegated.

9. Hardware security module according to one of Claims 1 to 8, wherein the control device is designed to decide that orders are to be delegated until the order load of the hardware security module falls below a predefined threshold value.

10. Hardware security module according to one of Claims 1 to 9, having a crypto unit that is designed to carry out cryptographic operations.

11. Hardware security module according to one of Claims 1 to 10, wherein the cryptographic operations in each case include decryption, encryption, signing and/or verification of a signature.

12. Hardware security module according to one of Claims 1 to 11, wherein the control device is designed to authenticate the other hardware security module based on a signature generated by the other hardware security module.

13. Hardware security module according to one of Claims 1 to 12, wherein the hardware security module and the other hardware security module have separate hardware for carrying out the cryptographic operations.

14. Hardware security module according to one of Claims 1 to 13, which is designed as a peripheral device for a computer system (102).

15. Data processing arrangement, having:
a plurality of hardware security modules (201, 202, 203) according to one of Claims 1 to 14 which are connected to one another by way of a communication link (204);
wherein the plurality of hardware security modules are connected to a plurality of computer systems (204, 205, 206) or are at least partially integrated in the computer systems (204, 205, 206),
wherein each hardware security module of the plurality of hardware security modules (201, 202, 203) can be used by different computer systems (204, 205, 206) of the plurality of computer systems (204, 205, 206).

## Revendications

1. Module de sécurité du matériel, comportant :
un récepteur conçu pour recevoir des tâches destinées à exécuter des opérations cryptographiques, et un dispositif de commande conçu pour
décider, sur la base d'une charge de tâches du module de sécurité du matériel, si une ou plusieurs des tâches reçues par le module de sécurité du matériel doivent être sous-traitées, et
dans le cas où une ou plusieurs des tâches reçues par le module de sécurité du matériel doivent être sous-traitées,
pour déterminer un autre module de sécurité du matériel permettant de sous-traiter lesdites une ou plusieurs tâches,
authentifier l'autre module de sécurité du matériel et
demander à l'autre module de sécurité du matériel de traiter lesdites une ou plusieurs tâches.

2. Module de sécurité du matériel selon la revendication 1, dans lequel le dispositif de commande est conçu pour configurer l'autre module de sécurité du matériel pour l'exécution desdites une ou plusieurs tâches.

3. Module de sécurité du matériel selon la revendication 1 ou 2, dans lequel le dispositif de commande est conçu pour cloner une configuration du module de sécurité du matériel sur l'autre module de sécurité du matériel pour le traitement desdites une ou plusieurs tâches par l'autre module de sécurité du matériel.

4. Module de sécurité du matériel selon l'une des revendications 1 à 3, dans lequel le dispositif de commande est conçu pour envoyer lesdites une ou plusieurs tâches à l'autre module de sécurité du matériel au moyen d'une liaison de communication poste à poste.

5. Module de sécurité du matériel selon l'une des revendications 1 à 4, dans lequel le dispositif de commande est conçu pour décider qu'une ou plusieurs tâches doivent être sous-traitées lorsque la charge de tâches du module de sécurité du matériel est supérieure à une valeur de seuil prédéterminée.

6. Module de sécurité du matériel selon la revendication 5, comprenant une file d'attente de tâches, dans lequel la charge de tâches est le niveau de remplissage de la file d'attente de tâches.

7. Module de sécurité du matériel selon l'une des revendications 1 à 6, dans lequel le dispositif de commande est conçu pour allouer l'autre module de sécurité du matériel et est conçu pour libérer à nouveau le module de sécurité du matériel après le traitement desdites une ou plusieurs tâches.

8. Module de sécurité du matériel selon l'une des revendications 1 à 7, dans lequel le dispositif de commande est conçu pour déterminer un nombre desdites une ou plusieurs tâches à sous-traiter en fonction de la charge de tâches du module de sécurité du matériel.

9. Module de sécurité du matériel selon l'une des revendications 1 à 8, dans lequel le dispositif de commande est conçu pour décider que les tâches doivent être sous-traitées jusqu'à ce que la charge de tâches du module de sécurité du matériel devienne inférieure à une valeur de seuil prédéterminée.

10. Module de sécurité du matériel selon l'une des revendications 1 à 9, comportant une unité de cryptage conçue pour exécuter des opérations cryptographiques.

11. Module de sécurité du matériel selon l'une des revendications 1 à 10, dans lequel les opérations cryptographiques comprennent respectivement un décryptage, un cryptage, une signature et/ou la vérification d'une signature.

12. Module de sécurité du matériel selon l'une des revendications 1 à 11, dans lequel le dispositif de commande est conçu pour authentifier l'autre module de sécurité du matériel sur la base d'une signature générée par l'autre module de sécurité du matériel.

13. Module de sécurité du matériel selon l'une des revendications 1 à 12, dans lequel le module de sécurité du matériel et l'autre module de sécurité du matériel comportent un matériel séparé pour exécuter les opérations cryptographiques.

14. Module de sécurité du matériel selon l'une des revendications 1 à 13, qui est conçu sous la forme d'un dispositif périphérique pour un système informatique (102) .

15. Dispositif de traitement des données, comportant :
une pluralité de modules de sécurité du matériel (201, 202, 203) selon l'une des revendications 1 à 14, qui sont reliés entre eux par l'intermédiaire d'une liaison de communication (204) ;
dans lequel la pluralité de modules de sécurité du matériel sont reliés à une pluralité de systèmes informatiques (204, 205, 206) ou sont au moins partiellement intégrés dans les systèmes informatiques (204, 205, 206),
dans lequel, parmi la pluralité de modules de sécurité du matériel (201, 202, 203), chaque module de sécurité du matériel peut être utilisé par différents systèmes informatiques (204, 205, 206) de la pluralité de systèmes informatiques (204, 205, 206).
